# EUROPEAN PATENT APPLICATION

(11) **EP 3 506 684 A1**
(43) Date of publication of application: **03.07.2019**
(21) Application number: 19152295.2
(22) Date of filing: 19.08.2013
(51) Int. Cl.: H04W 48/16, H04L 5/00, H04W 84/04

(54) **COMMUNICATION SYSTEM, BASE STATION DEVICE AND COMMUNICATION METHOD**

(30) Priority: 15.10.2012 JP 2012228247
(62) Divisional of application: 13846314.6
(71) Applicant: NTT DOCOMO, INC., Chiyoda-ku Tokyo 100-6150 (JP)
(72) Inventor: NAGATA, Satoshi, Tokyo, 100-6150 (JP); TAKEDA, Kazuaki, Tokyo, 100-6150 (JP); KISHIYAMA, Yoshihisa, Tokyo, 100-6150 (JP); NAKAMURA, Takehiro, Tokyo, 100-6150 (JP)
(74) Representative: Hoffmann Eitle

(57) **Abstract**

The present invention is designed to provide highly efficient small cell radio access that is specially customized for small cells. In a communication system having a macro base station apparatus (30) that forms a macro cell and a plurality of local base station apparatuses that are connected with the macro base station apparatus (30) via a communication link and that form small cells inside the macro cell, the macro base station apparatus (30) or the local base station apparatuses allocate signals to be transmitted and received by the small cells to specific radio resources and transmit the signals, and also report identification information that can identify the radio resources where the signals transmitted and r received by the small cells are allocated, to a mobile terminal apparatus.

## Description

### Technical Field

The present invention relates to a communication system, a base station apparatus and a communication method in a next-generation mobile communication system.

### Background Art

In a UMTS (Universal Mobile Telecommunications System) network, long-term evolution (LTE) is under study for the purposes of further increasing high-speed data rates, providing low delay and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Also, successor systems of LTE (referred to as, for example, "LTE-advanced" or "LTE enhancement" (hereinafter referred to as "LTE-A")) are under study for the purpose of achieving further broadbandization and increased speed beyond LTE. In Rel-10, which is one variation of LTE-A, an agreement has been reached to employ carrier aggregation, whereby a plurality of component carriers (CCs), in which the system band of the LTE system is one unit, are grouped to achieve broadbandization. Also, with LTE-A of Rel-10 and later versions, achieving increased capacity by means of a heterogeneous network (HetNet) configuration, in which many small cells are overlaid in a macro cell, is under study.

### Citation List

### Non-Patent Literature

Non-Patent Literature 1: 3GPP TR 25.913 "Requirements for Evolved UTRA and Evolved UTRAN"

### Summary of Invention

### Technical Problem

Now, in cellular systems such as W-CDMA, LTE (Rel. 8) and successor systems of LTE (for example, Rel. 9 and Rel. 10), the radio communication schemes (radio interfaces) are designed to support macro cells. In addition to cellular environments such as these, it is expected that, in the future, high-speed wireless services by means of near-field communication such as ones provided indoors, in shopping malls and so on will be provided. Consequently, there is a demand to design a new radio communication scheme that is specially customized for small cells, so that it is possible to secure capacity with small cells while securing coverage with macro cells.

The present invention has been made in view of the above, and it is therefore an object of the present invention to provide a communication system, a base station apparatus and a communication method that can provide highly efficient small cell radio access.

### Solution to Problem

The communication system of the present invention is a communication system having a macro base station apparatus that forms a macro cell and a plurality of local base station apparatuses that are connected with the macro base station apparatus via a communication link and that form small cells inside the macro cell, and, in this communication system, the macro base station apparatus or the local base station apparatuses allocate signals transmitted and received by the small cells to specific radio resources and transmit the signals, and also report identification information that can identify the radio resources where the signals transmitted and received by the small cells are allocated, to a mobile terminal apparatus.

### Advantageous Effects of Invention

According to the present invention, it is possible to provide highly efficient small cell radio access that is specially customized for small cells.

Brief Description of Drawings
FIG. 1 is a diagram to show a structure to place many small cells in a macro cell;
FIG. 2A is a HetNet structure diagram, in which a macro cell and small cells are operated using the same carrier, and FIG. 2B is a HetNet structure diagram, in which a macro cell and small cells are operated using different carriers;
FIG. 3 is a diagram to explain a radio frame including MBSFN subframes;
FIG. 4 is a diagram to explain a radio frame including subframes in which RRM/RLM measurement is restricted by an RRM/RLM measurement restriction;
FIG. 5 is a diagram to explain subframes in which CSI measurement is designated to be carried out by a CSI measurement restriction;
FIG. 6 is a diagram to explain a system structure of a radio communication system;
FIG. 7 is a diagram to show an overall structure of a macro cell base station apparatus; and
FIG. 8 is a diagram to show an overall structure of a small cell base station apparatus.

### Description of Embodiments

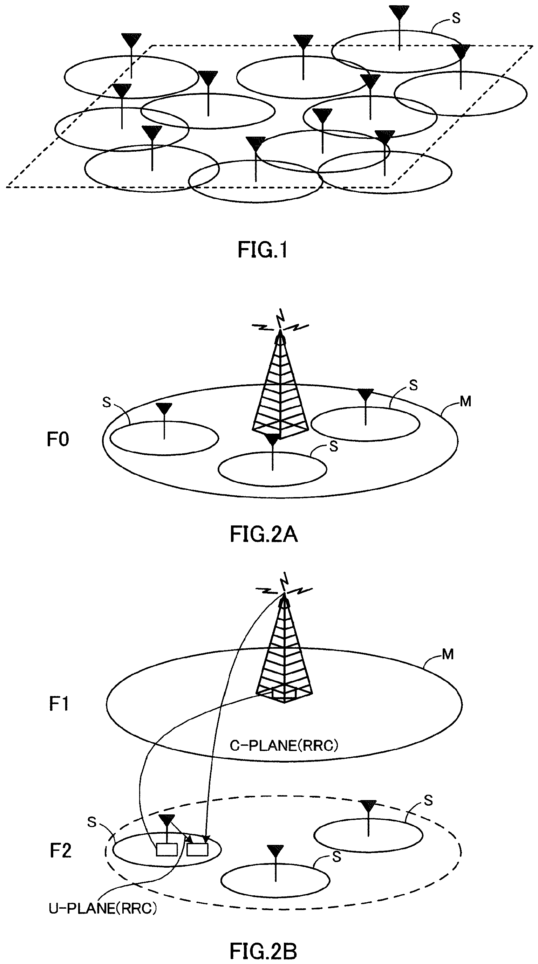

As shown in FIG. 1, although, in a heterogeneous network structure, many small cells are placed in a macro cell area, when many small cells S are placed in a macro cell area, it is necessary to design the small cells S taking into account capacity versus network costs. Network costs may include, for example, the cost of installing network nodes, backhaul links and so on, the operation cost for cell planning and maintenance support, the power consumption on the network side, and so on. Also, as a demand apart from capacity, small cells S are required to support saved power consumption on the mobile terminal apparatus side, random cell planning, and so on.

The present invention is applicable to the two kinds of heterogeneous networks (HetNets) shown in FIGs. 2A and 2B.

In the HetNet structure shown in FIG. 2A, the macro cell M and the small cells S are operated using the same carrier (frequency F0). In the 3GPP, inter-cell interference control (eICIC: enhanced Inter-Cell Interference Coordination) technique in HetNets is under study. As a result of this, eICIC in the time domain has been agreed upon. Interference coordination in the time domain (in subframe units) is also applicable to single-carrier communication as well. Interference is reduced by using almost-blank subframes (subframes in which data is not transmitted) or MBSFN subframes as non-transmission periods.

In the HetNet structure shown in FIG. 2B, the macro cell M and the small cells S are operated using different frequencies (F1 and F2). To operate the macro cell M and the small cells S with different frequencies (F1 and F2), carrier aggregation defined in LTE-A may be used. In Rel-10, carrier aggregation to group a plurality of component carriers (CCs) for broadbandization, where the system band of the conventional system (LTE) constitutes one unit, is defined. The HetNet structure shown in FIG. 2B represents a concept to employ a radio interface (NCT: New Carrier Type), to which the conventional concept of cell IDs does not apply, and which is specially customized for user data transmission in small cells S.

In the HetNet structure shown in FIG. 2B, the macro cell M supports C (Control)-plane to transmit control signals, and the small cells S support U (User)-plane to transmit user data, separately. In particular, by operating the macro cell M in a conventional LTE frequency band (for example, the 2 GHz band) and the small cells S in a frequency band (for example, the 3.5 GHz band) that is higher than that of the macro cell M, it is possible to maintain high connectivity against the mobility of mobile stations (UE: User Equipment), and, by using a wide bandwidth, realize high-speed communication that does not produce interference between the macro cells and the small cells. Furthermore, by employing NCT, which removes cell-specific signals (CRSs and so on), many advantages are achieved, such as simplified cell planning, energy saving, flexible application of CoMP (Coordinated Multi-Point) techniques and so on. Also, the macro cell M supports C-plane and U-plane together, and achieves transmission quality even with UEs without nearby small cells S.

Now, referring to the HetNet structure shown in FIG. 2B, there may be differences in requirements and structures between the macro cell M and the small cells S. The macro cell M has a limited bandwidth, and therefore spectral efficiency is very important. By contrast with this, the small cells S can take up a wide bandwidth easily, so that, as long as a wide bandwidth can be secured, the importance of spectral efficiency is not as high as it is for the macro cell M. While the macro cell M needs to support high mobility such as typified by cars, the small cells S have only to support low mobility. The macro cell M needs to secure a wide coverage. On the other hand, although the small cells S should preferably secure a wide coverage as well, the macro cell M can cover up the shortage of coverage.

Also, in the macro cell M, there is a significant power difference between the uplink and the downlink, and the uplink and the downlink are asymmetrical. By contrast with this, in the small cells S, there is little power difference between the uplink and the downlink, and the uplink and the downlink are made nearly symmetrical. Furthermore, in the macro cell M, the number of connecting users per cell is large, and, furthermore, cell planning is executed, so that there is little variation of traffic. By contrast with this, in the small cells S, the number of connecting users per cell is low, and, furthermore, cell planning may not be executed, and therefore traffic varies significantly. In this way, the optimal requirements for the small cells S are different from those of the macro cell, and therefore there is a need to design a radio communication scheme that is specially customized for the small cells S.

Considering interference that arises from saved power consumption and random cell planning, it is preferable to configure a radio communication scheme for small cells S that assumes non-transmission while there is no traffic. Consequently, the radio communication scheme for small cells S may be designed as UE-specific as possible. Consequently, the radio communication scheme for small cells S may be designed based on ePDCCHs (enhanced Physical Downlink Control Channels) and DM-RSs (Demodulation-Reference Signals), without using the PSS/SSS (Primary Synchronization Signal/Secondary Synchronization Signal), CRSs (Cell-specific Reference Signals) and the PDCCH (Physical Downlink Control Channel) in LTE and/or the like.

Here, an ePDCCH refers to a predetermined frequency band in the PDSCH region (data signal region) that is used as a PDCCH region (control signal region). ePDCCHs that are allocated to the PDSCH region are demodulated using DM-RSs. Note that an ePDCCH may be referred to as an "FDM-type PDCCH" or may be referred to as a "UE-PDCCH." Also, although a new carrier that is different from conventional carriers is used in the radio communication scheme for small cells S, this new carrier may be referred to as an "additional carrier," or may be referred to as an "extension carrier."

If everything in the radio communication scheme for small cells S is designed UE-specific, a mobile terminal apparatus has no opportunity to gain initial access to small cells. Consequently, even with the radio communication scheme for small cells, there may be a need to provide cell-specific reference signals for selecting small cells that are suitable for data channel (control channel) communication with individual mobile terminal apparatuses. In view of this need, it may be possible to transmit cell-specific reference signals from small cells in order to allow a mobile terminal apparatus to discover a small cell that is suitable for data channel (and/or control channel) transmission.

Also, in a HetNet environment such as the ones illustrated in FIG. 2, a study is in progress to stop signal transmission from small cells in which no mobile terminal apparatus is placed, small cells which are not involved in data communication with mobile terminal apparatuses and so on, and assume a dormant mode. In this way, by stopping signal transmission where there is no need, there is an expectation to reduce power consumption and reduce the amount of interference against other cells. Furthermore, following the growing popularity of network structures in which many small cells are present as candidates for access for mobile terminal apparatuses, in the future, technologies that relate to further reduction of power consumption, further reduction of the amount of interference and so on are likely to be proposed.

However, only mobile terminal apparatuses that comply with the specifications of Rel. 12 LTE and later versions (mobile terminal apparatuses of Rel. 12 LTE and later versions) support these small cell-related technologies. By contrast with this, mobile terminal apparatuses that comply with the specifications of Rel. 11 LTE and earlier versions (mobile terminal apparatuses of Rel. 11 LTE and earlier versions) do not support such small cell-related technologies. Consequently, for example, even when cell-specific reference signals are transmitted from small cells, mobile terminal apparatuses of Rel. 11 LTE and earlier versions cannot identify these reference signals. As a result of this, problems such as deterioration of the accuracy of demodulation of data signals and control signals due to interference from these reference signals might occur.

The present inventors have focused on the technical problem of how to reduce the negative influence which signals transmitted and received by small cells might have upon mobile terminal apparatuses that do not support these signals transmitted and received by small cells, in a network structure where many small cells are present as candidates for access for mobile terminal apparatuses, and arrived at the present invention.

In the following description, the cell-specific reference signals that are transmitted from small cells so as to allow mobile terminal apparatuses to find small cells that are suitable for data channel (and/or control channel) transmission will be referred to as "DISCOVERY SIGNALS." Note that the "DISCOVERY SIGNAL" may also be referred to as, for example, the "PDCH" (Physical Discovery Channel), the "BS" (Beacon Signal), the "DPS" (Discovery Pilot Signal) and so on. Also, a base station apparatus that constitutes a macro cell will be referred to as a "macro station," and a base station apparatus that constitutes a small cell will be referred to as a "local station."

Note that signals having the following characteristics may be used as DISCOVERY SIGNALS. DISCOVERY SIGNALS may be formed with one of the signals of (a) to (d) shown below, or may be formed by combining the signals of (a) to (d) in an arbitrary manner.
(a) The synchronization signals (PSS: Primary Synchronization Signal, and SSS: Secondary Synchronization Signal) that are defined in LTE (Rel. 8) may be used.
(b) Signals that use the same sequences as the synchronization signals defined in LTE (Rel. 8) and multiplex these sequences in different locations along the time/frequency direction may be used. For example, signals to multiplex the PSS and SSS in different slots may be used.
(c) DISCOVERY SIGNALS that are defined anew to select small cells may be used. For example, signals that have characteristics of having a long transmission cycle and/or having a large amount of radio resources per transmission unit compared to the synchronization signals (PSS and SSS) defined in LTE (Rel. 8) may be used.
(d) Conventional reference signals (CSI-RS, CRS, DM-RS, PRS and SRS) that are defined in LTE-A (Rel. 10) may be used. Also, part of the conventional reference signals (for example, a signal to transmit the CRS of one port in a 5 msec cycle) may be used as well.

The present invention provides a communication system in which signals that small cells transmit or receive (hereinafter referred to as "small cell communication signals") are allocated to specific radio resources and transmitted, and, in which, furthermore, information that can identify the radio resources where these small cell communication signals are allocated (hereinafter referred to as "resource identification information") is reported to mobile terminal apparatuses. A macro station or a local station transmits small cell communication signals (for example, DISCOVERY SIGNALS). A mobile terminal apparatus identifies the radio resources where the small cell communication signals are allocated, based on resource identification information reported from the macro station or the local station.

By this means, since resource identification information of small cell communication signals is reported to mobile terminal apparatuses, it is possible to identify the applicable radio resources and reduce the negative influence caused by the small cell communication signals in mobile terminal apparatuses that do not support the small cell communication signals.

A first aspect of the present invention provides a communication system, in which small cell communication signals are allocated only to subframes that can be selected as MBSFN (MBMS Single Frequency Network) subframes among the subframes contained in a radio frame, and in which, furthermore, the MBSFN subframes where these small cell communication signals are allocated are reported to mobile terminal apparatuses. The mobile terminal apparatuses identify the radio resources (subframes) where the small cell communication signals are allocated, based on the MBSFN subframes.

By this means, since MBSFN subframes are reported to mobile terminal apparatuses as resource identification information of small cell communication signals, the mobile terminal apparatuses can identify subframes that contain small cell communication signals as subframes where measurement alone is allowed. As a result of this, it is possible to prevent the situation where mobile terminal apparatuses identify subframes containing small cell communication signals as normal subframes (for example, subframes in which data signals and control signals are multiplexed), so that it is possible to reduce the occurrence of problems such as deterioration of the accuracy of demodulation of data signals and control signals.

A second aspect of the present invention provides a communication system, in which small cell communication signals are allocated only to subframes where RRM/RLM measurement is restricted by an RRM/RLM measurement restriction, and in which, furthermore, the subframes where these small cell communication signals are allocated are reported to mobile terminal apparatuses as subframes where RRM/RLM measurement is restricted. The mobile terminal apparatuses identify the radio resources (subframes) where the small cell communication signals are allocated, based on the subframes where RRM/RLM measurement is restricted.

By this means, since subframes in which RRM/RLM measurement is restricted are reported to mobile terminal apparatuses as resource identification information of small cell communication signals, the mobile terminal apparatuses can identify subframes that contain small cell communication signals as subframes where RRM/RLM measurement cannot be executed. As a result of this, it is possible to prevent the situation where mobile terminal apparatuses identify subframes that contain small cell communication signals as subframes where RRM/RLM measurement can be executed, so that it becomes possible to feed back adequate RRM/RLM measurement results.

A third aspect of the present invention provides a communication system, in which small cell communication signals are allocated only to subframes where CSI measurement is designated to be carried out by a CSI measurement restriction, and in which, furthermore, the subframes where these small cell communication signals are allocated are reported to mobile terminal apparatuses as subframes in which CSI measurement is designated to be carried out. The mobile terminal apparatuses identify the radio resources (subframes) where the small cell communication signals are allocated, based on the subframes in which CSI measurement is designated to be carried out.

By this means, since subframes, in which CSI measurement is designated to be carried out, are reported to mobile terminal apparatuses as resource identification information of small cell communication signals, the mobile terminal apparatuses can identify subframes that contain small cell communication signals as subframes where CSI measurement should be carried out. Consequently, the mobile terminal apparatuses report channel received quality information that is gained by performing interference estimation based on subframes that contain small cell communication signals. Meanwhile, a macro station or a local station can recognize that the channel received quality information is based on subframes that contain small cell communication signals, and therefore can learn the characteristics of this channel received quality information.

A fourth aspect of the present invention provides a communication system, in which small cell communication signal are allocated only to radio resources where CSI-RSs can be multiplexed, and in which, furthermore, the radio resources where these small cell communication signals are allocated are reported to mobile terminal apparatuses. The mobile terminal apparatuses identify the radio resources where the small cell communication signals are allocated, based on the radio resources where CSI-RSs are allocated.

By this means, since radio resources where CSI-RSs are allocated are reported to mobile terminal apparatuses as resource identification information of small cell communication signals, the mobile terminal apparatuses can identify radio resources that contain small cell communication signals as radio resources where CSI-RSs are multiplexed. As a result of this, it is possible to prevent the situation where, in mobile terminal apparatuses, radio resources that contain small cell communication signals are involved in the execution of rate matching, so that it becomes possible to execute rate matching adequately by using radio resources where data signals may be multiplexed.

A fifth aspect of the present invention provides a communication system, in which small cell communication signals are allocated only to subframes of carrier type (new carrier type) that provide no resource for allocating a physical downlink control channel, and in which, furthermore, the subframes where these small cell communication signals are allocated are reported to mobile terminal apparatuses. The mobile terminal apparatuses identify the radio resources where the small cell communication signals are allocated, based on the subframes that are reported.

By this means, small cell communication signals are allocated to subframes of new carrier type. In the subframes of new carrier type, mobile terminal apparatuses that do not support the small cell communication signals are not connected, so that it is possible to prevent the situation where the mobile terminal apparatuses that do not support the small cell communication signals are negatively influenced by the small cell communication signals.

Next, the first aspect of the present invention will be described in detail. As noted earlier, according to the first aspect, small cell communication signals are allocated to subframes that can be selected as MBSFN subframes, among the subframes contained in a radio frame, and, furthermore, the MBSFN subframes where these small cell communication signals are allocated are reported. In other words, according to the first aspect, in a carrier where mobile terminal apparatuses that do not support small cell communication signals (mobile terminal apparatuses of Rel-11 LTE and earlier versions) are connected, subframes that contain small cell communication signals are reported to the mobile terminal apparatuses that do not support the small cell communication signals as MBSFN subframes, so as not to execute data demodulation and so on in the subframes that contain small cell communication signals.

In an MBSFN subframe, maximum two OFDM symbols from the top of the subframe are defined as the region for allocating the PDCCH. In the MBSFN subframe, resource elements (REs) apart from the PDCCH allocation region are defined as the region for allocating the PDSCH. Furthermore, no CRS is allocated to this PDSCH allocation region.

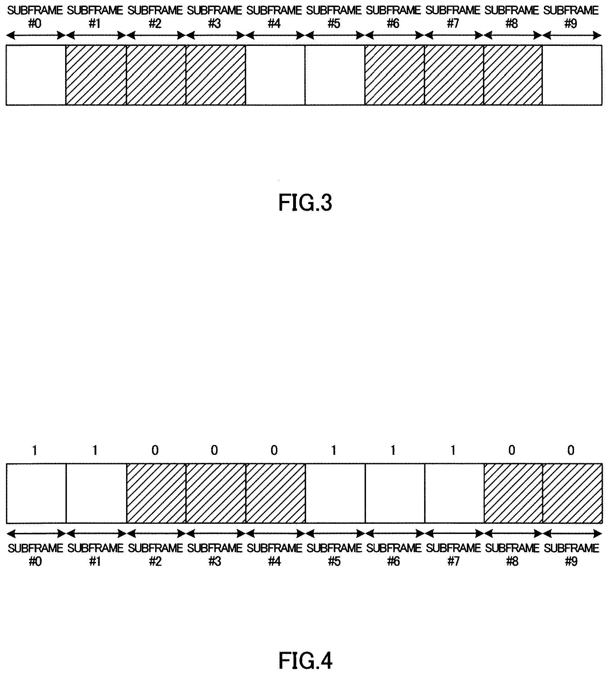

FIG. 3 is a diagram to explain a radio frame that contains MBSFN subframes. As shown in FIG. 3, among subframes #0 to #9 that constitute the radio frame, MBSFN subframes are selectively set in the subframes that exclude subframe #0, #4, #5 and #9. That is to say, it is possible to set MBSFN subframes selectively in subframe #1 to #3, #6 to #8. In the MBSFN subframes, mobile terminal apparatuses can execute measurement alone.

A macro station or a local station allocates small cell communication signals to subframes that can be selected as MBSFN subframe in this way (subframe #1 to #3 and #6 to #8). Then, the MBSFN subframes allocated in this way are reported to mobile terminal apparatuses. For example, the MBSFN subframes may be reported by using higher layer signaling, but this is by no means limiting. The MBSFN subframes may be reported by means of broadcast signals and control signals (for example, the PDCCH) as well.

The small cell communication signals include, for example, the above-noted DISCOVERY SIGNALS, the signal for designating dormant mode to stop signal transmission from the small cells (hereinafter referred to as "dormant mode designating signal"), control signals, synchronization signals, broadcast signals, reference signal and data signals that are transmitted from the small cells to mobile terminal apparatuses, and control signals, synchronization signals, broadcast signals, reference signals and data signals that are transmitted from the macro cell to the small cells, but these are by no means limiting. As a principle, the DISCOVERY SIGNALS are transmitted from the local stations, and the dormant mode designating signal is transmitted from the macro station.

Even when the local stations transmit DISCOVERY SIGNALS, the radio resources (subframes) to contain the DISCOVERY SIGNALS are allocated to MBSFN subframes. Then, these radio resources (subframe) are reported to mobile terminal apparatuses that do not support the DISCOVERY SIGNALS as MBSFN subframes. Consequently, it is possible to prevent the situation where the mobile terminal apparatuses identify the radio resources (subframes) that contain the DISCOVERY SIGNALS as normal subframes (for example, subframes in which data signals and control signals are multiplexed), so that it becomes possible to prevent the occurrence of problems such as deterioration of the accuracy of demodulation of data signals and control signals.

Similarly, even when the macro station transmits the dormant mode designating signal, the radio resource (subframe) that contains the dormant mode designating signal is allocated to an MBSFN subframe. Then, the radio resource (subframe) is reported to mobile terminal apparatuses that do not support the dormant mode designating signal as an MBSFN subframe. Consequently, it is possible to prevent the situation where the mobile terminal apparatuses identify the radio resource (subframe) that contains the dormant mode designating signal as a normal subframe, so that it becomes possible to prevent the occurrence of problems such as deterioration of the accuracy of demodulation of data signals and control signals.

Next, the second aspect of the present invention will be described in detail. As noted earlier, according to the second aspect, small cell-related signals are allocated only to subframes where RRM/RLM measurement is restricted by an RRM/RLM measurement restriction, and, furthermore, the subframes where these small cell communication signals are allocated are reported to mobile terminal apparatuses as subframes in which RRM/RLM measurement is restricted. In other words, according to the second aspect, in a carrier in which mobile terminal apparatuses that do not support small cell communication signals (mobile terminal apparatuses of Rel-11 LTE and earlier versions) are connected, subframes that contain small cell communication signals are reported to the mobile terminal apparatuses that do not support the small cell communication signals as subframes where RRM/RLM measurement is restricted, so as not to execute RRM/RLM measurement in the subframes that contain small cell communication signals.

In LTE (Rel-10), the content of not carrying out RLM measurement outside subframes that are designated by higher layer signaling finds support (TS36.213). Furthermore, in LTE (Rel-10), the content of carrying out RRM measurement only in subframes that are designated by higher layer signaling so as to allow mobile terminal apparatuses to measure subframes with little interference finds support (TS36.331).

FIG. 4 is a diagram to explain a radio frame that contains subframes in which RRM/RLM measurement is restricted by an RRM/RLM measurement restriction. Note that, in FIG. 4, the content pertaining to the RRM/RLM measurement restriction is shown in a simplified manner. As shown in FIG. 4, in RRM/RLM measurement restriction, the bit "1" designates the subframes in which RRM/RLM measurement is designated to be carried out, and the bit "0" designates the subframes in which RRM/RLM measurement is restricted. In the example shown in FIG. 4, among subframes #0 to #9 constituting the radio frame, RRM/RLM measurement is allowed to be carried out in subframes #0, #1, and #5 to #7, and RRM/RLM measurement is restricted in subframes #2 to #4, #8 and #9.

The macro station or the local stations allocate small cell communication signals to the subframes in which RRM/RLM measurement is restricted in this way. Then, the subframes which are allocated in this way and in which RRM/RLM measurement is restricted are reported to mobile terminal apparatuses. For example, the subframes in which RRM/RLM measurement is restricted may be reported by using higher layer signaling, but this is by no means limiting. The subframes in which RRM/RLM measurement is restricted may be reported by using broadcast signals, control signals (for example, the PDCCH) and so on. Similar to the first aspect, although, for example, the DISCOVERY SIGNALS and dormant mode designating signal are included in small cell communication signals, this is by no means limiting.

Even when the local stations transmit DISCOVERY SIGNALS, the radio resources (subframes) to contain the DISCOVERY SIGNALS are allocated to subframes in which RRM/RLM measurement is restricted. Then, these radio resources (subframes) are reported to mobile terminal apparatuses that do not support the DISCOVERY SIGNALS as subframes in which RRM/RLM measurement is restricted. Consequently, it is possible to prevent the situation where the mobile terminal apparatuses identify the radio resources (subframes) that contain the DISCOVERY SIGNALS as subframes where RRM/RLM measurement can be executed, so that it becomes possible to feed back adequate RRM/RLM measurement results.

Similarly, even when the macro station transmits the dormant mode designating signal, the radio resource (subframe) to contain the dormant mode designating signal is allocated to a subframe in which RRM/RLM measurement is restricted. Then, this radio resource (subframe) is reported to mobile terminal apparatuses that do not support the dormant mode designating signal as a subframe in which RRM/RLM measurement is restricted. Consequently, in the mobile terminal apparatus, it is possible to prevent the situation where radio resources (subframe) that contain the dormant mode designating signal are identified as subframes in which RRM/RLM measurement can be execute, so that it becomes possible to feed back adequate RRM/RLM measurement results.

Next, the third aspect of the present invention will be described in detail. As noted earlier, according to the third aspect, small cell communication signals are allocated only to subframes in which CSI measurement is designated to be carried out by a CSI measurement restriction, and, furthermore, the subframes where these small cell communication signals are allocated are reported to mobile terminal apparatuses as subframes in which CSI measurement is designated to be carried out.

In LTE (Rel. 10), the contents of preparing two kinds of subframe sets, in which CSI measurement is designated to be carried out, and executing CSI measurement in mobile terminal apparatuses by using these subframe sets find support (CSI measurement restriction).

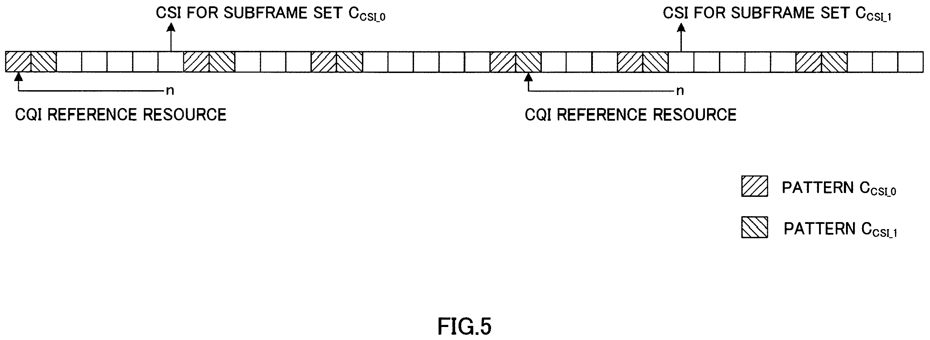

FIG. 5 is a diagram to explain subframes, in which CSI measurement is designated to be carried out by a CSI measurement restriction. Note that, in FIG. 5, the content pertaining to the CSI measurement restriction is shown in a simplified manner. As shown in FIG. 5, the macro station can set two kinds of subframe sets (pattern C_{CSI_0} and pattern C_{CSI_1}) for mobile terminal apparatuses. With the example shown in FIG. 5, when the CSI of C_{CSI_0} is fed back in subframe n, a mobile terminal apparatus goes four subframes or more backward from that subframe n and calculates the CSI by using the subframe containing the nearest C_{CSI_0} as the CQI reference resource.

The macro station allocates small cell communication signals to one subframe set (for example, the pattern C_{CSI_0}) between the two kinds of subframe sets, which are set in this way and in which CSI measurement is designated to be carried out. Then, the macro base station reports the subframes, in which CSI measurement is designated to be carried out in this way, to mobile terminal apparatuses. For example, although the subframes in which CSI measurement is designated to be carried out are reported by using higher layer signaling, this is by no means limiting. The subframes where CSI measurement is designated to be carried out may be reported by using broadcast signals, control signals (for example, the PDCCH) as well. Similar to the first and second aspects, although, for example, the DISCOVERY SIGNALS and dormant mode designating signal are included in small cell communication signals, this is by no means limiting.

Upon receiving this report, a mobile terminal apparatus executes CSI measurement using the two kinds of subframe sets, and feeds back channel received quality information that is achieved by performing two kinds of interference estimation to the macro station. The macro station recognizes the one subframe set to which the small cell communication signals are allocated (for example, the pattern C_{CSI_0}). Consequently, the macro station discards this one subframe set (for example, the pattern C_{CSI_0}). Then, the macro base station executes scheduling and so on by using the channel received quality information used with respect to the other subframe set (for example, the pattern C_{CSI_1}), to which no small cell communication signal is allocated. By this means, even when the local stations (macro station) transmit DISCOVERY SIGNALS (dormant mode designating signal) as small cell communication signals, it is still possible to execute scheduling and so on by using channel received quality information that is gained by using subframes that are not influenced by these small cell communication signals, so that it is possible to prevent the situation where channel received quality information cannot be measured due to DISCOVERY SIGNALS (dormant mode designating signal).

Next, the fourth aspect of the present invention will be described in detail. As noted earlier, according to the fourth aspect, small cell communication signals are allocated only to radio resources where CSI-RSs can be multiplexed, and the radio resources to which these small cell communication signals are allocated are reported to mobile terminal apparatuses. In other words, according to the fourth aspect, in a carrier in which mobile terminal apparatuses that do not support small cell communication signals (mobile terminal apparatuses of Rel-11 LTE and earlier versions) are connected, radio resources that contain small cell communication signals are reported to the mobile terminal apparatuses that do not support the small cell communication signals, as radio resources where CSI-RSs can be multiplexed, so as not to execute data demodulation in the radio resources that contain small cell communication signals.

The small cell communication signals (for example, the DISCOVERY SIGNALS, the dormant mode designating signal and so on) that are multiplexed over the radio resources are not data signals. Consequently, if rate matching is carried out by involving these small cell communication signals in mobile terminal apparatuses not supporting the small cell communication signals, it is not possible to adjust the bit rate of received data adequately. Meanwhile, to carry out rate matching in mobile terminal apparatuses, it is necessary to select the radio resources (REs) where the data signal (PDSCH) is allocated. Note that, in this rate matching, the radio resources (REs) where CSI-RSs are multiplexed are excluded.

From this perspective, according to the fourth aspect, small cell communication signals are limitedly multiplexed over radio resources (REs) where CSI-RSs can be multiplexed, and, furthermore, the radio resources (REs) where these small cell communication signals are allocated are reported to mobile terminal apparatuses. A mobile terminal apparatus that receives this report can carry out rate matching by excluding the radio resources (REs) where the small cell communication signals are multiplexed. As a result of this, it is possible to prevent the situation where rate matching is carried out by involving the radio resources where the small cell communication signals are multiplexed, so that it becomes possible to execute rate matching adequately by using radio resources where data signals may be multiplexed.

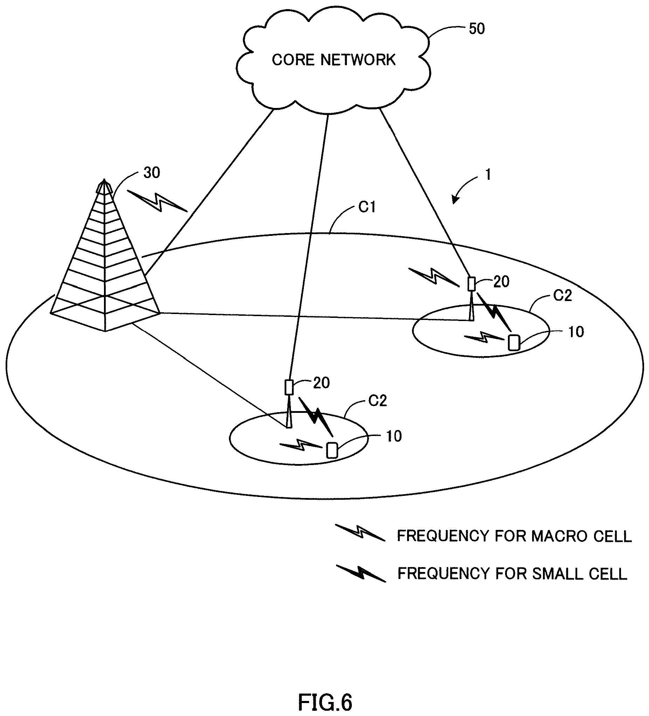

Now, the radio communication system according to the present embodiment will be described in detail. FIG. 6 is a diagram to explain a system structure of a radio communication system according to the present embodiment. Note that the radio communication system shown in FIG. 6 is a system to accommodate, for example, the LTE system or SUPER 3G. This radio communication system supports carrier aggregation, whereby a plurality of fundamental frequency blocks are grouped into one, by using the system band of the LTE system as one unit. Also, this radio communication system may be referred to as "IMT-advanced," "4G," or "FRA (Future Radio Access)" and so on.

As shown in FIG. 6, the radio communication system 1 has a macro station 30, which covers a macro cell C1, and a plurality of local stations 30, which cover a plurality of small cells C2 provided inside the macro cell C1. Also, many mobile terminal apparatuses 10 are placed in the macro cell C1 and in each small cell C2. The mobile terminal apparatuses 10 support the radio communication schemes for the macro cell and the small cells, and are configured to be capable of performing radio communication with the macro station 30 and the local stations 20.

Communication between the mobile terminal apparatuses 10 and the macro station 30 is carried out using a macro cell frequency (for example, a frequency band). Communication between the mobile terminal apparatuses 10 and the local stations 20 is carried out using a small cell frequency (for example, a high frequency band). Also, the macro station 30 and each local station 20 are connected by wire connection or by wireless connection.

The macro station 30 and each local station 20 are connected with a higher station apparatus, which is not illustrated, and are connected with a core network 50 via the higher station apparatus. Note that the higher station apparatus may be, for example, an access gateway apparatus, a radio network controller (RNC), a mobility management entity (MME) and so on, but is by no means limited to these. Also, the local stations 20 may be connected with the higher station apparatus via the macro station 30.

Note that, although the mobile terminal apparatuses 10 may be either LTE terminals or LTE-A terminals, the following description will be given simply with respect to mobile terminal apparatuses, unless specified otherwise. Also, although mobile terminal apparatuses will be described to perform radio communication with the macro station 30 and the local stations 20 for ease of explanation, more generally, user equipment (UE) to include both mobile terminal apparatuses and fixed terminal apparatuses may be used as well. Also, the local stations 20 and the macro station 30 may be referred to as "macro cell transmission point" and "small cell transmission points," respectively. Note that the local stations 20 may be optical remote base station apparatuses as well.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing the system band into bands formed with one or continuous resource blocks, per terminal, and allowing a plurality of terminals to use mutually different bands.

Now, communication channels in the LTE system will be described. Downlink communication channels include a PDSCH (Physical Downlink Shared Channel), which is used by each mobile terminal apparatus 10 on a shared basis, and downlink L1/L2 control channels (PDCCH, PCFICH and PHICH). User data and higher control information are transmitted by the PDSCH. Scheduling information for the PDSCH and the PUSCH and so on are transmitted by the PDCCH (Physical Downlink Control Channel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

Uplink communication channels include a PUSCH (Physical Uplink Shared Channel), which is used by each mobile terminal apparatus 10 on a shared basis as an uplink data channel, and a PUCCH (Physical Uplink Control Channel), which is an uplink control channel. User data and higher control information are transmitted by this PUSCH. Also, downlink radio quality information (CQI: Channel Quality Indicator), ACK/NACK and so on are transmitted by the PUCCH.

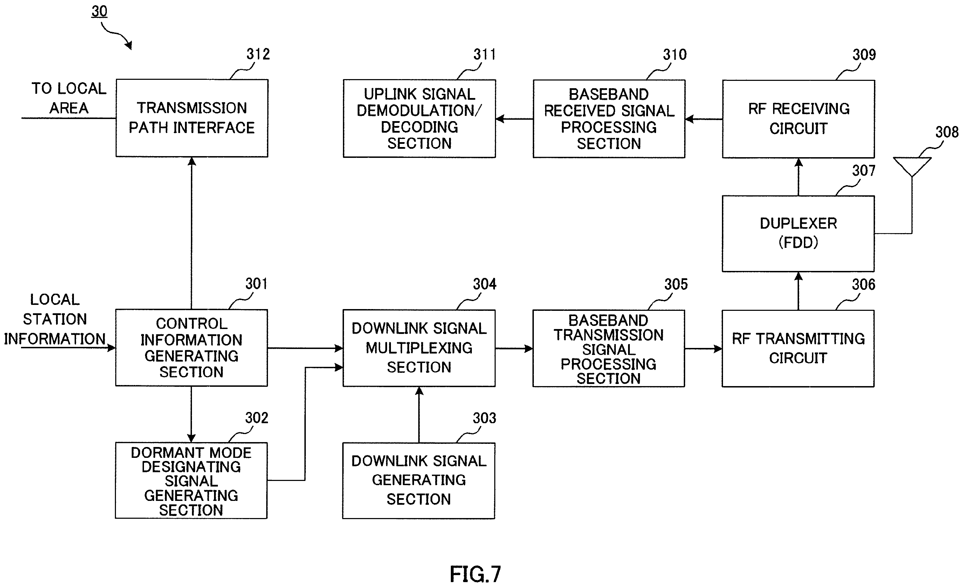

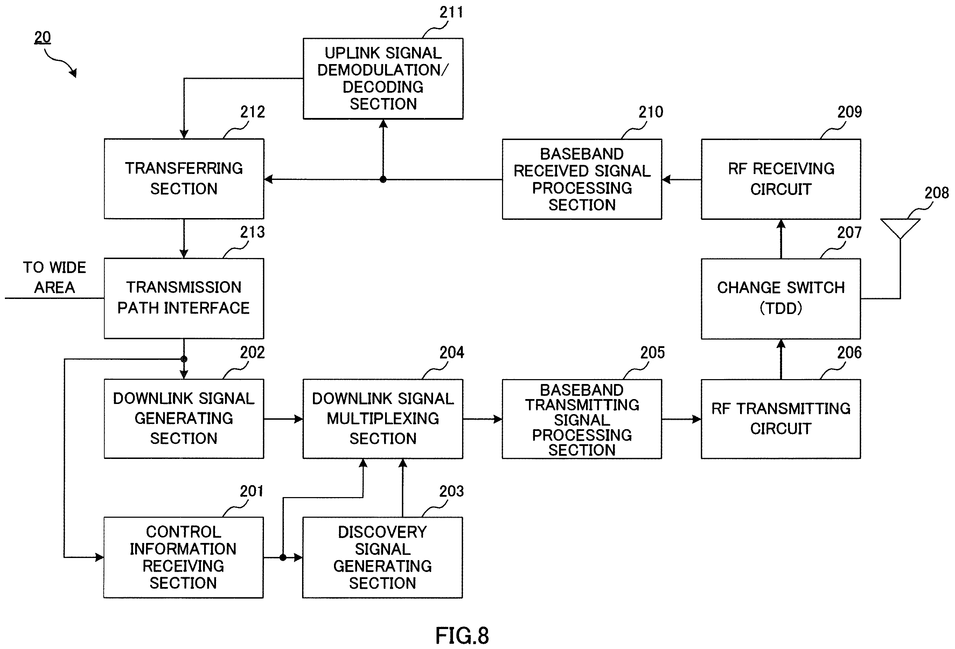

Now, overall structures of the macro station 30 and the local stations 20 will be described below with reference to FIG. 7 and FIG. 8. FIG. 7 and FIG. 8 are diagrams to show overall structures of the macro station (macro cell base station apparatus) 30 and the local stations (small cell base station apparatuses) 20, respectively. Note that, in the following description, a case will be described where, as examples of small cell communication signals, the macro station 30 generates dormant mode designating signals and the local stations 20 generate DISCOVERY SIGNALS. However, the small cell communication signals to be generated in the macro station 30 and the local stations 20 are by no means limited to these, and may be changed as appropriate.

As shown in FIG. 7, the macro station 30 has, as processing sections on the transmitting sequence, a control information generating section 301, a dormant mode designating signal generating section 302, a downlink signal generating section 303, a downlink signal multiplexing section 304, a baseband transmission signal processing section 305 and an RF transmitting circuit 306.

The control information generating section 301 generates control information for allowing the macro station 30 and the local stations 20 to communicate with the mobile terminal apparatuses 10. The control information generating section 301 outputs the generated control information to the transmission path interface 312 and the downlink signal multiplexing section 304. For example, control information (DS transmission control information) for transmitting DISCOVERY SIGNALS from the local stations 20 is output to the transmission path interface 312. The DS transmission control information is transmitted to the local stations 20 via the transmission path interface 312. On the other hand, control information for the macro cell (macro cell control information) is transmitted to the mobile terminal apparatuses 10 via the downlink signal multiplexing section 304.

The dormant mode designating signal generating section 302 generates a dormant mode designating signal in accordance in response to a command from the control information generating section 301. The downlink signal generating section 303 generates a downlink data signal and a downlink reference signal. Also, depending on the radio resource where the dormant mode designating signal is multiplexed, the downlink signal generating section 303 generates a higher layer signal to include identification information that can identify that radio resource. For example, according to the first aspect, a higher layer signal to include subframes that can be selected as MBSFN subframes is generated. Also, according to the second aspect, a higher layer signal to include subframes where RRM/RLM measurement is restricted by an RRM/RLM measurement restriction is generated. Furthermore, according to the third aspect, a higher layer signal to include subframes, in which CSI measurement is designated to be carried out by a CSI measurement restriction, is generated. Furthermore, according to the fourth aspect, a higher layer signal to include radio resources where CSI-RSs can be multiplexed is generated. Furthermore, according to the fifth aspect, a higher layer signal to include subframes of carrier type (new carrier type) that provide no resource for allocating a physical downlink control channel is generated.

The downlink signal multiplexing section 304 constitutes a multiplexing section, and multiplexes the macro cell control information, the dormant mode designating signal, the downlink data signal as a macro cell downlink signal, and the downlink reference signal. For example, according to the first aspect, the downlink signal multiplexing section 304 multiplexes the dormant mode designating signal over a subframe that can be selected as an MBSFN subframe. Also, according to the second aspect, the downlink signal multiplexing section 304 multiplexes the dormant mode designating signal over a subframe where RRM/RLM measurement is restricted by an RRM/RLM measurement restriction. Furthermore, according to the third aspect, the downlink signal multiplexing section 304 multiplexes the dormant mode designating signal over a subframe in which CSI measurement is designated to be carried out by a CSI measurement restriction. Furthermore, according to the fourth aspect, the downlink signal multiplexing section 304 multiplexes the dormant mode designating signal over a radio resource where a CSI-RS can be multiplexed. Furthermore, according to the fifth aspect, the downlink signal multiplexing section 304 multiplexes the dormant mode designating signal over a subframe of carrier type (new carrier type) that provides no resource for allocating the physical downlink control channel.

The macro cell downlink signal for the mobile terminal apparatuses 10 is input in the baseband transmission signal processing section 305, and subjected to digital signal processing. For example, in the event of a downlink signal of the OFDM scheme, the signal is converted from a frequency domain signal to a time sequence signal through an inverse fast Fourier transform (IFFT: Inverse Fast Fourier Transform), and cyclic prefixes are inserted. Then, the downlink signal passes the RF transmitting circuit 306, and is transmitted from the transmitting/receiving antenna 308 via the duplexer 307 that is provided between the transmitting sequence and the receiving sequence.

Also, as shown in FIG. 7, the macro station 30 has, as processing sections on the receiving sequence, an RF receiving circuit 309, a baseband received signal processing section 310, and an uplink signal demodulation/decoding section 311.

An uplink signal from a mobile terminal apparatus 10 is received in the transmitting/receiving antenna 308, and input in the baseband received signal processing section 310 via the duplexer 307 and the RF receiving circuit 309. In the baseband received signal processing section 310, the uplink signal is subjected to digital signal processing. For example, in the event of an uplink signal of the OFDM scheme, the cyclic prefixes are removed, and the signal is converted from a time sequence signal to a frequency domain signal through a fast Fourier transform (FFT: Fast Fourier Transform). The uplink data signal is input in the uplink signal demodulation/decoding section 311, and decoded (descrambled) and demodulated in the uplink signal demodulation/decoding section 311.

Meanwhile, as shown in FIG. 8, a local station 20 has a control information receiving section 201. Furthermore, the local station 20 has, as processing sections on the transmitting sequence, a downlink signal generating section 202, a DISCOVERY SIGNAL generating section 203, a downlink signal multiplexing section 204, a baseband transmission signal processing section 205 and an RF transmitting circuit 206. Note that the local station 20 is located very close to the mobile terminal apparatus 10.

The control information receiving section 201 receives control information from the macro station 30 via the transmission path interface 213. For example, DS transmission control information is received. The control information receiving section 201 outputs the DS transmission control information to the DISCOVERY SIGNAL generating section 203. Also, when the local station 20 transfers control information to the mobile terminal apparatus 10, the appropriate control information is output to the downlink signal multiplexing section 204.

The downlink signal generating section 202 generates a downlink data signal (PDSCH), a downlink reference signal and a downlink control signal (ePDCCH). Depending on the radio resources where the DISCOVERY SIGNALS are multiplexed, the downlink signal generating section 202 generates a higher layer signal to include identification information that can identify the radio resources. For example, according to the first aspect, a higher layer signal to include subframes that can be selected as MBSFN subframes is generated. Also, according to the second aspect, a higher layer signal to include subframes where RRM/RLM measurement is restricted by an RRM/RLM measurement restriction is generated. Furthermore, according to the third aspect, a higher layer signal to include subframes, in which CSI measurement is designated to be carried out by a CSI measurement restriction, is generated. Furthermore, according to the fourth aspect, a higher layer signal to include radio resources where CSI-RSs can be multiplexed is generated. Furthermore, according to the fifth aspect, a higher layer signal to include subframes of carrier type (new carrier type) that provide no resource for allocating the physical downlink control channel is generated.

The DISCOVERY SIGNAL generating section 203 generates the DISCOVERY SIGNAL based on the DS transmission control information that is input from the control information receiving section 201. The DS transmission control information includes radio resource information, signal sequence information and so on, for transmitting the DISCOVERY SIGNAL to the mobile terminal apparatus 10. The radio resource information includes, for example, the transmission interval, the frequency position, the code of the DISCOVERY SIGNAL, and so on.

The downlink signal multiplexing section 204 constitutes a multiplexing section, and multiplexes the downlink transmission data, the DISCOVERY SIGNAL, the downlink reference signal, and the downlink control signal. For example, according to the first aspect, the downlink signal multiplexing section 204 multiplexes the DISCOVERY SIGNAL over a subframe that can be selected as an MBSFN subframe. Also, according to the second aspect, the downlink signal multiplexing section 204 multiplexes the DISCOVERY SIGNAL over a subframe where RRM/RLM measurement is restricted by an RRM/RLM measurement restriction. Furthermore, according to the third aspect, the downlink signal multiplexing section 204 multiplexes the DISCOVERY SIGNAL over a subframe in which CSI measurement is designated to be carried out by a CSI measurement restriction. Furthermore, according to the fourth aspect, the downlink signal multiplexing section 204 multiplexes the DISCOVERY SIGNAL over a radio resource where a CSI-RS can be multiplexed. Furthermore, according to the fifth aspect, the downlink signal multiplexing section 204 multiplexes the DISCOVERY SIGNAL over a subframe of carrier type (new carrier type) that provides no resource for allocating the physical downlink control channel.

The downlink signal for the mobile terminal apparatuses 10 is input in the baseband transmission signal processing section 205, and subjected to digital signal processing. For example, in the event of a downlink signal of the OFDM scheme, the signal is converted from a frequency domain signal to a time sequence signal through an inverse fast Fourier transform (IFFT: Inverse Fast Fourier Transform), and cyclic prefixes are inserted. Then, the downlink signal passes the RF transmitting circuit 206, and is transmitted from the transmitting/receiving antenna 208 via the change switch 207 that is provided between the transmitting sequence and the receiving sequence. Note that a duplexer may be provided instead of the change switch 207.

Also, as shown in FIG. 8, the local station 20 has, as processing sections on the receiving sequence, an RF receiving circuit 209, a baseband received signal processing section 210, an uplink signal demodulation/decoding section 211, and a transferring section 212.

A small cell uplink signal from the mobile terminal apparatus 10 is received in the small cell transmitting/receiving antenna 208, and input in the baseband received signal processing section 210 via the change switch 207 and the RF receiving circuit 209. In the baseband received signal processing section 210, the uplink signal is subjected to digital signal processing. For example, in the event of an uplink signal of the OFDM scheme, the cyclic prefixes are removed, and the signal is converted from a time sequence signal into a frequency domain signal through a fast Fourier transform (FFT). The uplink data signal is input in the uplink signal demodulation/decoding section 211, and decoded (descrambled) and demodulated in the uplink signal demodulation/decoding section 211.

The transferring section 212 transfers the information decoded from the uplink signal, such as CSI information, to the macro station 30 via the transmission path interface 213. For example, when the local station 20 is determined by the macro station 30 to be the local station to transmit the data channel and the control channel signal, a command to transmit the data channel and the control channel signal to the mobile terminal apparatus 10 is reported via the transmission path interface 213.

As has been described above, according to the radio communication system 1 of the present embodiment, identification information (higher layer signaling) of radio resources where the small cell communication signals (for example, the DISCOVERY SIGNALS, the dormant mode designating signal and so on) are multiplexed is reported to mobile terminal apparatuses 10, so that it is possible to identify these radio resources and reduce the negative influence caused by the small cell communication signals, even in mobile terminal apparatuses 10 that do not support the small cell communication signals.

The present invention is by no means limited to the above embodiment and can be implemented in various modifications. For example, it is possible to adequately change the number of carriers, the bandwidth of the carriers, the signaling method, the number of processing sections, the order of processes and so on in the above description, without departing from the scope of the present invention, and implement the present invention. Besides, the present invention can be implemented with various changes, without departing from the scope of the present invention.

The disclosure of Japanese Patent Application No. 2012-228247, filed on October 15, 2012, including the specification, drawings and abstract, is incorporated herein by reference in its entirety.

Further embodiments are definded as E1 to E19 below:
E1. A communication system comprising a macro base station apparatus that forms a macro cell and a plurality of local base station apparatuses that are connected with the macro base station apparatus via a communication link and that form small cells inside the macro cell, wherein the macro base station apparatus or the local base station apparatuses allocate signals transmitted and received by the small cells to specific radio resources and transmit the signals, and also report identification information that can identify the radio resources where the signals transmitted and received by the small cells are allocated, to a mobile terminal apparatus.
E2. The communication system according to E1, wherein the macro base station apparatus or the local base station apparatuses allocate the signals transmitted and received by the small cells only to subframes that can be selected as MBSFN (MBMS Single Frequency Network) subframes, among subframes contained in a radio frame.
E3. The communication system according to E1, wherein the macro base station apparatus or the local base station apparatuses allocate the signals transmitted and received by the small cells only to subframes where RRM/RLM measurement is restricted by an RRM/RLM measurement restriction.
E4. The communication system according to E1, wherein the macro base station apparatus or the local base station apparatuses allocate the signals transmitted and received by the small cells only to subframes where CSI measurement is designated to be carried out by a CSI measurement restriction.
E5. The communication system according to E1, wherein the macro base station apparatus or the local base station apparatuses allocate the signals transmitted and received by the small cells only to radio resources where CSI-RSs can be multiplexed.
E6. The communication system according to E1, wherein the macro base station apparatus or the local base station apparatuses allocate the signals transmitted and received by the small cells only to subframes of carrier type which provide no resource for allocating a physical downlink control channel.
E7. The communication system according to E1, wherein the macro base station apparatus or the local base station apparatuses report the identification information to the mobile terminal apparatus through higher layer signaling.
E8. The communication system according to E1, wherein the macro base station apparatus transmits a signal that can specify a small cell where signal transmission is stopped, as a signal to be transmitted and received by the small cells.
E9. The communication system according to E1, wherein the local base station apparatuses transmit a reference signal that is used to detect the local base station apparatuses as a signal transmitted and received by the small cells.
E10. A base station apparatus that is connected to a network where a plurality of small cells are present as candidates for access for a specific mobile terminal apparatus, the base station apparatus comprising: a multiplexing section that multiplexes signals transmit and receive by the small cells over specific radio resources; and a transmitting section that transmits the signals transmitted and received by the small cells, and that also transmits identification information that can identify the radio resources where the signals transmitted and received by the small cells are multiplexed.
E11. The base station apparatus according to E10, wherein the multiplexing section multiplexes the signals transmitted and received by the small cells only over subframes that can be selected as MBSFN (MBMS Single Frequency Network) subframes, among subframes contained in a radio frame.
E12. The base station apparatus according to E10, wherein the multiplexing section multiplexes the signals transmitted and received by the small cells only over subframes where RRM/RLM measurement is restricted by an RRM/RLM measurement restriction.
E13. The base station apparatus according to E10, wherein the multiplexing section multiplexes the signals transmitted and received by the small cells only over subframes where CSI measurement is designated to be carried out by a CSI measurement restriction.
E14. The base station apparatus according to E10, wherein the multiplexing section multiplexes the signals transmitted and received by the small cells only over radio resources where CSI-RSs can be multiplexed.
E15. The base station apparatus according to E10, wherein the multiplexing section multiplexes the signals transmitted and received by the small cells only over subframes of carrier type which provide no resource for allocating a physical downlink control channel.
E16. The base station apparatus according to E10, wherein the multiplexing section transmits the identification information by including the identification information in higher layer signaling.
E17. The base station apparatus according to E10, wherein: the base station apparatus constitutes a macro base station apparatus that forms a macro cell; and the transmitting section transmits a signal that can specify a small cell where signal transmission is stopped, as a signal to be transmitted and received by the small cells.
E18. The base station apparatus according to E10, wherein:
   the base station apparatus constitutes a local base station apparatus that is connected with a macro base station apparatus forming a macro cell via a communication link, and that forms a small cell within the macro cell; and the transmitting section transmits a reference signal that is used to detect the local base station apparatuses as a signal transmitted and received by the small cells.
E19. A communication method in a communication system comprising a macro base station apparatus that forms a macro cell and a plurality of local base station apparatuses that are connected with the macro base station apparatus via a communication link and that form small cells inside the macro cell, the communication method comprising the steps in which: from the macro base station apparatus or the local base station apparatuses, signals to be transmitted and received by the small cells are allocated to specific radio resources and transmitted; and identification information that can identify the radio resources where the signals transmitted and received by the small cells are allocated is reported to a mobile terminal apparatus.

## Claims

1. A base station apparatus comprising:
a multiplexing section configured to map a discovery signal having a longer transmission periodicity than a synchronization signal defined in LTE Rel. 8, to a radio resource to which a channel state information-reference signal, CSI-RS, is multiplexable; and
a transmitting section configured to transmit identification information for identifying the radio resource and to transmit the discovery signal in the radio resource.

2. A user terminal comprising:
means for receiving identification information for identifying a radio resource to which a channel state information-reference signal, CSI-RS, is multiplexable and for receiving, in the radio resource, a discovery signal having a longer transmission periodicity than a synchronization signal defined in LTE Rel. 8; and
means for performing measurement on the radio resource based on the identification information.

3. A radio communication method for a user terminal, comprising:
receiving identification information for identifying a radio resource to which a channel state information-reference signal, CSI-RS, is multiplexable and receiving, in the radio resource, a discovery signal having a longer transmission periodicity than a synchronization signal defined in LTE Rel. 8; and
performing measurement on the radio resource based on the identification information.
